# EUROPÄISCHE PATENTSCHRIFT

(11) **EP 3 231 524 B1**
(45) Veröffentlichungstag und Bekanntmachung des Hinweises auf die Patenterteilung: **16.08.2023**
(21) Anmeldenummer: 17163448.8
(22) Anmeldetag: 28.03.2017
(51) Int. Cl.: B21D 13/00, B21D 53/08, B21D 28/26, F28F 1/32

(54) **FERTIGUNGSVERFAHREN FÜR EINEN WÄRMEÜBERTRAGER MIT LAMELLEN AUF ROHREN**
PRODUCTION METHOD FOR A HEAT EXCHANGER WITH LAMELLAE ON TUBES
PROCÉDÉ DE FABRICATION D'UN ÉCHANGEUR THERMIQUE À LAMELLES SUR TUBES

(30) Priorität: 28.03.2016 DE 102016105645
(43) Veröffentlichungstag der Anmeldung: 18.10.2017
(73) Patentinhaber: Howatherm Klimatechnik GmbH, 55767 Brücken (DE)
(72) Erfinder: Prof. Dr. Kaup, Christoph, 55767 Brücken (DE); Dipl.-Ing. Bolt, Karsten, 55767 Brücken (DE)
(74) Vertreter: Westphal, Mussgnug & Partner Patentanwälte mbB

(56) Entgegenhaltungen:
- EP-A1- 0 268 831
- DE-A1-102010 023 684
- US-A- 3 645 330
- US-A1- 2004 261 984
- US-A1- 2008 142 201

## Beschreibung

Die Erfindung betrifft ein Fertigungsverfahren für einen Wärmeübertrager mit im Abstand zueinander angeordneten, profilierten Lamellen zur gemeinsamen Verrippung mehrerer Rohre, der dazu bestimmt ist, ein erstes Wärmeübertragerfluid (z.B. Luft) längs der Oberfläche der Lamellen und ein zweites Wärmeübertragerfluid (z.B. Wasser) in den Rohren zu führen.

Aus US 2004/261984 A1 ist bekannt ein Fertigungsverfahren für das Umformen eines Bahnmaterials zu einer regelmäßig zur Oberflächenvergrößerung eines Lamellenpaketes umgeformten Lamelle (10), welche Lamellen (10) im Anschluss an die Fertigung in gewissem Abstand zueinander zur gemeinsamen Verrippung mehrerer Rohre (3) in einem Wärmeübertrager (1) angeordnet werden können.

Ein entsprechender Lamellenrohrwärmeübertrager ist aus DE 10 2010 023 684 A1 bekannt. Fertigungsverfahren sind beispielsweise aus US 2003/0188852 A1 oder US 2001/0029767 A1 bekannt.

Seit Jahrzehnten hat sich die Konstruktion von aufgepressten Lamellen auf Rohren bewährt. Die Lamellen bestehen meist aus Aluminium oder aus Kupfer. Die Rohre bestehen meist aus Kupfer. Kupfer gilt für die Wasserführung als sicheres Rohrmaterial, es ist ein hervorragender Wärmeleiter, drucksicher und trotzdem leicht. Aluminium ist ebenfalls ein hervorragender Wärmeleiter und darüber hinaus auch korrosionssicher. In bekannten Verfahren werden profilierte Lamellen vom Band gestanzt und auf Rohre aufgebracht. Eine hydraulische Aufweitung sorgt für festen Sitz und somit sichere Wärmeübertragung. Die Abstände von Lamelle zu Lamelle sind entsprechend der benötigten Wärmeleistung und Geometrie der Lamelle optimiert. Es gibt zahlreiche Möglichkeiten für den problemlosen Einsatz, wie Konvektoren, Kühlregister für stille Kühlung und andere Luft/Wasser-Wärmeübertrager in der Raumlufttechnik.

Aus der US 6,889,759 B2 ist ein derartiger Wärmeübertrager bekannt, bei dem zur Vergrößerung der Wärmeübertragungsflächen der Lamellen die Oberflächen der Lamellen fein strukturiert sind. Seine Lamellen sind derartig wellenförmig verformt, dass die Wellenlängsrichtung längs der Strömungsrichtung des ersten Wärmeübertragerfluids verläuft. Seine Rohre sind versetzt angeordnet, sodass die Strömung zwischen den Lamellen mehrfach zwangsumgelenkt wird.

Die Fertigung solcher Wärmeübertrager, bei denen die Lamellen mit in Strömungsrichtung des ersten Wärmeübertragerfluids verlaufenden Umformungen versehen und bei denen die Rohre versetzt angeordnet sind, war bisher aus fertigungstechnischer Sicht problematisch. Es bleibt daher in der Lamellenfertigung bisher dabei, dass die Lamellen ihre Wellenlängsrichtung in einer Produktionsrichtung behalten.

Diese Probleme wurden durch ein Fertigungsverfahren für eine Wärmeübertragerlamelle nach Anspruch 1, umfassend seine kennzeichnenden Merkmale, ein Fertigungsverfahren für einen Wärmeübertrager nach Anspruch 6, und/oder eine Verwendung von erfindungsgemäßen Versteifungsflächen nach Anspruch 9 beseitigt. Damit können Wärmeübertragerpakete nach bisherigem Fertigungsverfahren in Längsrichtung beliebig lang gebaut werden.

Erfindungsgemäß ist zu fertigen, eine Lamelle eines Wärmeübertragers, die später in gewissem Abstand zur jeweils nächsten Lamelle parallel im Wärmeübertrager angeordnet wird, zur gemeinsamen Verrippung mehrerer Rohre. Die Lamellen werden erfindungsgemäß in einem einem Folgeverbund mit mehreren Einzelwerkzeugen umgeformt. Besonders herausfordernd ist es nun, dass der Folgeverbund ein Einformen von quer zur Produktionsrichtung verlaufenden regelmäßig wechselnden Erhebungen und Vertiefungen vorsieht, besonders bevorzugt wechselnd auf- und abfallende Wellen. Genau bei dieser Anordnung einer Wellenstruktur kommt es im Stand der Technik zu Produktionsproblemen. Der Folgeverbund formt nun zur Beherrschung von Materialspannungen erfindungsgemäß außer der regelmäßigen Lamellenstruktur auch zumindest eine Versteifungsflächenspur, die zumindest grob entlang der Produktionsrichtung verläuft. Es können im Sinne der Erfindung mehrere einzelne Versteifungsflächen eine oder mehrere Versteifungsspuren bilden, die im Fall der besonders bevorzugten mehreren Versteifungsflächen mit Unterbrechungen in Produktionsrichtung zusammenwirken. Es gelingt mithin, die Lamelle ausreichend auszusteifen, um eine passgenaue Lammelenbahnlage im Folgeverbund, bevorzugt in nächsten Einzelwerkzeugen des Folgeverbunds, und auch für nachfolgende Montageschritte zu gewährleisten.

Ein Bahnmaterial tritt dazu bevorzugt von seiner flachen Grundbeschaffenheit ausgehend an einem vorderen Ende in eine Straße aus in einer Produktionsrichtung als Stanzfolgen aufeinander folgenden Einzelwerkzeugen eines Folgeverbunds ein, um in zumindest zwei solcher Einzelwerkzeugen eine Konturierung eingeprägt zu erhalten. Die Begriffe Stanzen oder Stanzfolge sollen hier für jede Form von Umformung verwendet sein, nicht ausschließlich für einen ein Material trennenden Prozess.

Dabei wird das Bahnmaterial in Produktionsrichtung gesehen an zumindest einer Stelle zu dessen Vorschub gegriffen. Die Erfindung ermöglicht es nun auch, weiter hinten in Produktionsrichtung gesehen, bevorzugt nach Prägewerkzeugen und vor oder in einem Trennwerkzeug weitere Klemmbacken für einen unabhängigen weiteren Vortrieb vorzusehen. In einer Basisvariante der Fertigungsmaschine geschieht dies jedoch nur an einer einzigen Position, bevorzugt in einem Bereich kurz vor dem letzten Einzelwerkzeug. Das Bahnmaterial verlässt schließlich den Folgeverbund als eine geformte Lamellenbahn an einem in Produktionsrichtung gesehen hinteren Ende. Am hinteren Ende ist bevorzugt eine Trennfolge eingerichtet, sodass dort je nach Produktionsanforderung längs und/oder quer getrennt werden kann.

Die gefertigten Lamellen können nun in Richtung quer zu den Wellenlängsachsen nahezu beliebig lang werden. Die Auslegung von Wärmeübertragern gewinnt mithin einen neuen Freiheitsgrad.

In der Verwendung solcher Lamellen - im späteren Wärmeübertrager gedacht - könnte man es auch so ausdrücken: Die Lamellen werden mit entlang einer späteren Strömungsrichtung eines ersten Wärmeübertragerfluids verlaufenden Umformungen versehen, wobei die Produktionsrichtung und die spätere Strömungsrichtung quer zueinander ausgerichtet sind.

Ein Kern der Erfindung ist dabei darin zu sehen, dass in einer vorderen Stanzfolge zumindest eine in Produktionsrichtung verlaufende Versteifungsfläche statt der ansonsten regelmäßigen Form, insbesondere statt der ansonsten eingeformten, sich quer zur Produktionsrichtung erstreckenden Welle, eingeprägt werden. Besonders bevorzugt werden über die Fläche des Bahnmaterials verteilt Versteifungsflächen als Konturen eingeprägt, die sich in einer Projektion quer zur Produktionsrichtung überschneiden. Es entsteht mithin zumindest eine, zumindest gebrochen zusammenwirkende Versteifungsflächenspur entlang der Produktionsrichtung durch das Folgewerkzeug hindurch.

Diese Versteifungsflächenspur aus nicht aneinander angrenzenden Versteifungsteilflächen verläuft durch die sich in der Projektion quer zur Produktionsrichtung überschneidenden Versteifungsteilflächen und ist - von oben betrachtet - wegen des Versatzes der Versteifungsteilflächen zueinander unterbrochen. Durch die beinahe Überschneidung oder die gänzliche Überschneidung der Versteifungsteilflächen beim Nachvollziehen der Versteifungsflächenspur in Richtung quer zur Produktionsrichtung ergibt sich somit besonders in Produktionsrichtung entgegen der ansonsten drohenden Instabilität aufgrund von Materialspannungen durch den Umformporzeß der Querwelle eine Steigerung der Steifigkeit gegenüber Biegung und Zug-/Druckbelastungen.

In späteren Einzelwerkzeugen eines bevorzugten Folgeverbunds werden zumindest Teile dieser Versteifungsflächen von zumindest einem Einzelwerkzeug wiederaufgenommen, sodass um sie herum und ggf. von ihnen unabhängig verlaufend mit gesicherter Positionierung des zumindest einen Einzelwerkzeuges zum Bahnmaterial regelmäßige Umformungen einprägbar sind.

Vorteilhafte Ausführungsformen sind in Unteransprüchen angegeben.

Ausschließlich in den Ansprüchen formulierte Merkmale sind auch Teil dieser Beschreibung.

Es ist mithin gelungen, eine Regel zu entwickeln, wie für ein sicheres wirtschaftliches Produzieren Rohrgeometrien, Rohrbeabstandungen und Lage der Rohre in ihrer Verteilung über die Lamellenfläche hinweg aufeinander abzustimmen sind, um Umformungen zur Oberflächenvergrößerung der Lamelle quer zur Produktionsrichtung einprägen zu können, ohne dass Dimensionsinstabilitäten der zunehmend verformten und unter Spannung stehenden Lamelle, insbesondere während des Transportes durch die Einzelwerkzeuge eines Folgeverbunds, im Lamellenstanzwerkzeug zu unbeabsichtigten Verformungen führen.

Vorzugsweise sind die den Durchtrittsöffnungen in den Lamellen für die Wärmeübertragerrohre benachbarten Wellenenden gewölbt (tropfenförmig) ausgebildet.

Durch die tropfenförmige Auswölbung werden zum Einen die Materialspannungen zwischen den Wellen und den Versteifungen reduziert und zum Zweiten sind damit aerodynamische Vorteil des strömenden Fluids verbunden.

Vorzugsweise sind die Durchtrittsöffnungen in den Lamellen für die Wärmeübertragerrohre von einer unverformten flachen Ringfläche umgeben. Besonders bevorzugt sind Rohre mit ovalem Querschnitt vorgesehen, dessen Längsachse entlang der späteren Strömungsrichtung gelegt ist. Dabei ergänzen sich besonders vorteilhaft ovale Ringflächen um die Rohre herum in den Lamellen eingeprägt als bleibende Teilversteifungsflächen zu einer besonders vorteilhaft gebrochenen Versteifungsflächenspur, wenn sich die Ringflächen nach weiteren vorteilhaften Ausführungsformen in späterer Strömungsrichtung des zwischen den Lamellen strömenden Wärmeübertragerfluid gesehen überschneiden.

Bei einer fluchtenden Rohranordnung, bei der die Rohre nicht versetzt, sondern in Reihe angeordnet werden, ist ein wie zuvor beschriebenes Verfahren schwer anwendbar, da dann die unverformten Teilversteifungsflächen einen zu hohen Anteil an der Gesamtfläche erreichten und damit dem Ziel der Oberflächenvergrößerung zu deutlich entgegenstünden. Hierzu ist nach einer weiteren vorteilhaften Ausführungsform vorgesehen, zwischen den einzelnen Rohrreihen, oder Paaren von Rohrreihen unverformte Versteifungsstreifen als glatte Lamellenfläche quer zu den Wellen zu positionieren, um eine Formsteifigkeit der Lamelle in Produktionsrichtung sicherstellen zu können. Diese Flächen laufen parallel zum Produktionsprozess, also entlang der Produktionsrichtung, und benötigen nur eine Breite von etwa 5 mm.

Die Erfindung ist in den Zeichnungen der Figuren 1 bis 4 beispielhaft dargestellt. Es zeigen:
- Fig. l: eine Prinzipskizze für einen mittels eines erfindungsgemäßen Verfahrens hergestellten Wärmeübertragers in perspektivischer Darstellung,
- Fig. 2: eine Verfahrensskizze zu einem erfindungsgemäßen Fertigungsverfahren nach einem ersten Ausführungsbeispiel in Draufsicht,
- Fig. 3: eine Verfahrensskizze zu einem erfindungsgemäßen Fertigungsverfahren nach einem zweiten Ausführungsbeispiel in Draufsicht und
- Fig. 4: eine Verfahrensskizze zu einem erfindungsgemäßen Fertigungsverfahren nach einem dritten Ausführungsbeispiel in Draufsicht.

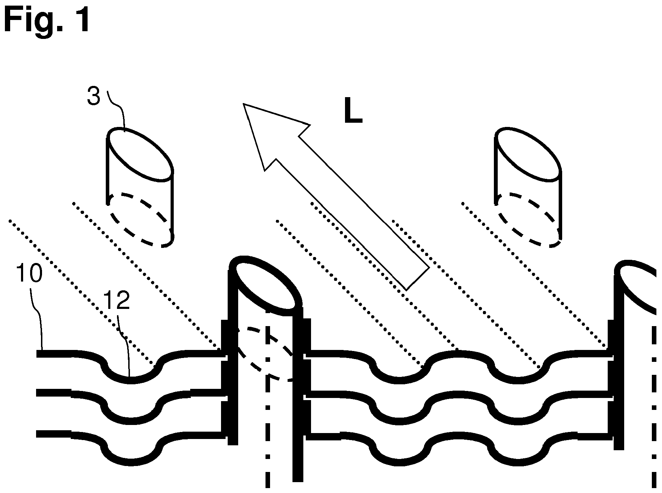

In Figur 1 sind die Lamellen 10 eines in Figur 1 schematisch dargestellten Wärmeübertragers 1 im Querschnitt wellenförmig ausgebildet, wobei diese Umformungen 12 entlang einer Luftrichtung L eines längs der Oberfläche der Lamellen geführten Wärmeübertragerfluids verlaufen.

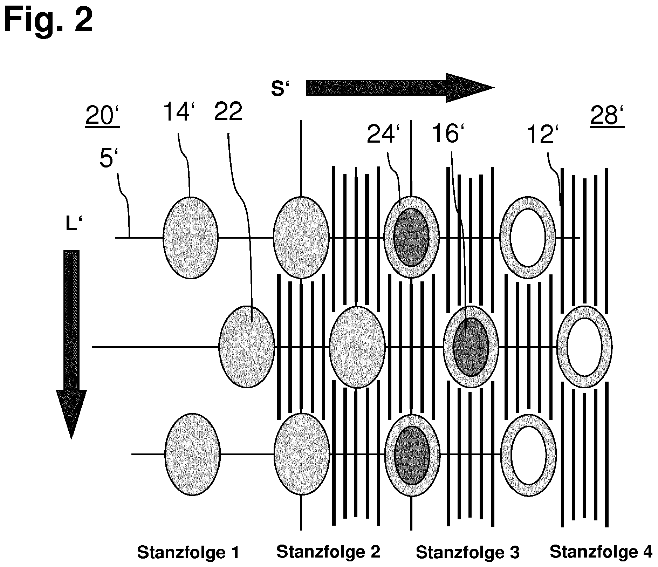

Quer zu dieser späteren Luftrichtung L erfolgt zunächst die Fertigung solcher Lamellen 10 aus einem planen Bahnmaterial 5 in einem Folgewerkzeug, wie schematisch in den Figuren 2 bis 4 mit drei Ausführungsbeispielen dargestellt. Die Bezugszeichen der drei Ausführungsbeispiele sind in den Figuren entsprechend durchapostrophiert.

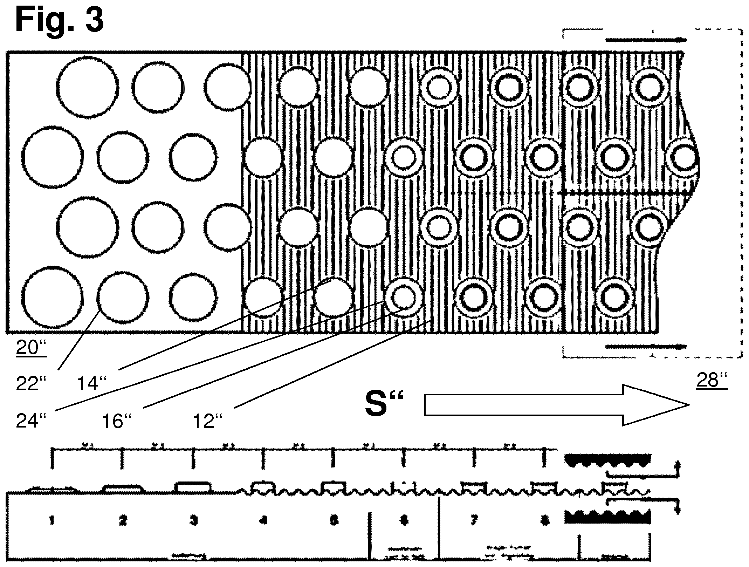

Das erfindungsgemäße Fertigungsverfahren für den Wärmeübertrager 1 mit später im Abstand zueinander angeordneten Lamellen 10 zur gemeinsamen Verrippung mehrerer Rohre 3 ist hier in Bezug auf die Herstellung der Lamellen 10 selbst behandelt. Das Herstellen der Lamellen 10 ist als ein Stanzen in Folgeverbundwerkzeugen ausgeführt, wobei das Bahnmaterial 5 von seiner flachen Grundbeschaffenheit ausgehend an einem vorderen Ende 20 in eine Straße aus in einer Produktionsrichtung, vorliegend übereinstimmend mit einer Stanzrichtung S, als Stanzfolgen aufeinander folgenden Folgeverbundwerkzeugen eintritt. Alle Stanzfolgen stanzen mit einem einzigen Hub. Das Bahnmaterial 5 wird nach jedem Hub um die Länge einer Stanzfolge in Produktionsrichtung (Stanzrichtung) S weitertransportiert. In zumindest zwei Folgeverbundwerkzeugen wird nach den dargestellten Ausführungsbeispielen zunächst eine Konturierung 14 eingeprägt. Das Bahnmaterial wird im Ausführungsbeispiel nach Figur 3 in Produktionsrichtung gesehen an einer einzigen hinteren Position beidseitig zwischen Wellenbacken zu dessen Vorschub gegriffen.

Hieraus würde sich in herkömmlichen Stanzfolgen die Konsequenz ergeben, dass vorangehend eingeprägte Spannungen zu Längenänderungen des Bahnmaterials 5 während des Transports in Folgewerkzeuge und dort dann oder auf dem Weg dahin zu Fehlverformungen führen.

Um das Fehlverformen zu verhindern, werden nach den dargestellten Ausführungsbeispielen im Wellenformprozess, genauer in einer vorderen Stanzfolge noch örtlich gesehen vor dem eigentlichen Wellenformen, über die Fläche des noch planen Bahnmaterials 5 verteilt Versteifungsflächen 22, 24, 26 eingeprägt, die beim weiteren Ausformen der Lamelle 10 zum Position sichern dienen. Die Versteifungsflächen steifen das Bahnmaterial 5 nachhaltig durch den gesamten Prozess aus, auch wenn links und rechts davon Oberflächenvergrößerungen angelegt sind, beispielsweise Wellen oder Zickzack- oder sonstige Einstanzungen. Insbesondere bei einem einzigen Zugangriff im hinteren Teil des Folgewerkzeugs wirken die erfindungsgemäßen Versteifungsflächen Ungewissheiten im Längenverhalten der Materialbahn 5 entgegen.

In dargestellten Ausführungsformen der Figuren 2 und 3 überschneiden sich die ovalen bzw. runden Versteifungsflächen 22, 24 in einer seitlichen Projektion quer zur Produktionsrichtung S leicht, sodass zumindest eine, zumindest gebrochen zusammenwirkende Versteifungsflächenspur zumindest grob entlang der Produktionsrichtung S zumindest zwei der Stanzfolgen aus Folgeverbundwerkzeugen überspannend angelegt ist und in späteren Stanzfolgen, beispielsweise Stanzfolgen 6 bis 9 in Figur 3, bestehend zumindest aus Teilversteifungsflächen.

Um die Versteifungsflächen 22, 24, 26 herum verlaufend sind die Umformungen 12 mit gesicherter Positionierung der hinteren Folgewerkzeuge zum Bahnmaterial 5 eingestanzt, was im Verständnis dieser Anmeldung als eine Formstanzung einer Einprägung entspricht. In den hierfür zuständigen Folgewerkzeugen, die nicht dargestellt sind, wird nach vorteilhaften Ausführungsformen der Erfindung darauf geachtet, dass die Umformungen 12 von den Versteifungsflächen 22, 24, 26 unabhängig verlaufend, also auch ohne ein grenzüberschreitendes Materialfließen, ausgeführt werden.

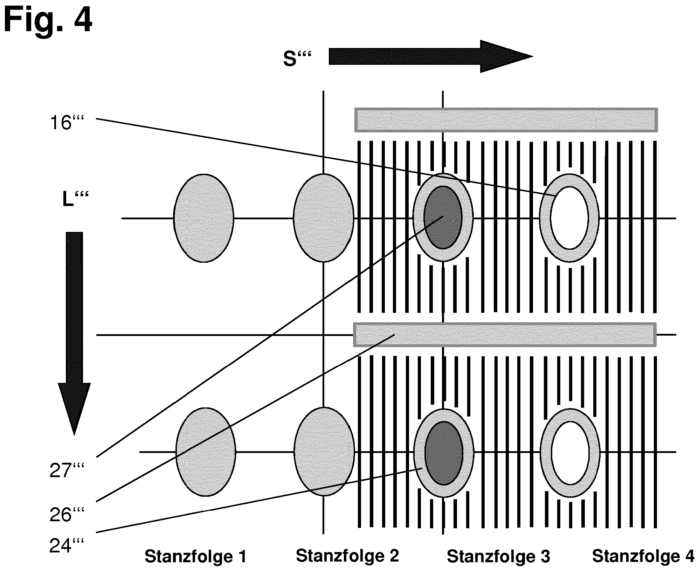

Die Umformungen 12 sind vorliegend als Wellen im Schnitt quer zur Luftrichtung L des Wärmeübertragerfluids sinusförmig ausgebildet. Die Wellen laufen zu den Versteifungsflächen 22, 24, 26 hin als Wölbungen aus, beispielsweise wenn, nach Fig. 4, die Versteifungsflächen als Planhaltungsflächen 27‴ von Planhaltern in Folgewerkzeugen während des Wellenformens vor ihrer Umformung geschützt sind. Dabei kann das teilflächige Planhalten gleichzeitig als Fixierung bzw. Zentrierung des Bahnmaterials zum jeweiligen Folgewerkzeug dienen. Alternativ zum Wellenformen kann die Oberfläche der Lamelle vergrößert sein, in dem statt der Wellenform ein Zickzackmuster mit Dreiecksformen (nicht dargestellt) zwischen den Versteifungsflächen 22, 24, 26 gestanzt wird.

Von dem vorderen Ende 20" ausgehend folgen in Figur 3 statt nur vier Stanzfolgen neun Stanzfolgen aufeinander: vierstufiges Ausformen von gerundeten Versteifungsflächen 22", Ausformen von Versteifungsflächen mit eckig gekanteter oberer Konturen 14" in Stanzfolge 5, welche Topographieentwicklung in Figur 3 unterhalb der Draufsicht als schematische Seitenansicht gut erkennbar ist, Ausformen von regelmäßigen Umformungen 12" ab Stanzfolge 4 außerhalb der Versteifungsflächen 22", Ausstanzen von Löchern 16" in den Versteifungsflächen 22", sodass um die ausgestanzten Löcher 16" herum Teilversteifungsflächen 24" verbleiben, zweistufiges Kragenformen und Längenteilung in einer neunten Stufe, in der auch der Vorschub mit Wellenbacken angeordnet ist.

Die Spalten zwischen den Wellenflanken solcher Lamellen 10 in derart gefertigten Wärmeübertragern 1 erzwingen ein Umströmen der bevorzugt ovalen Wärmeübertragerrohre, die besonders bevorzugt mit ihren Schmalzeiten der Strömung begegnen. Beim Überströmen von einer Welle zur nächsten ergibt sich eine Geschwindigkeitserhöhung, die zusätzlich den Wärmeübergang verbessert, aber den Druckabfall nicht wesentlich erhöht.

In einer nicht dargestellten vorteilhaften Ausführungsform hat sich die nachfolgende Stanzfolge bewährt: Ausformen von Plateaus als Versteifungsflächen, Herstellen der vergrößerten Oberfläche der Lamelle, Herstellen der Kragen für Löcher zur späteren Aufnahme der Rohre 3, Herstellen der Löcher selbst.

Auch bei dieser Ausführungsform überlappen sich in Produktionsrichtung Versteifungsflächen, sodass die Materialspannung nicht zur ungewollten Verformung der Stanzschritte führt und damit die Stanzfolgeschritte nicht mehr präzise eingehalten werden können. Ändert sich die Lamelle nämlich ohne erfindungsgemäße Versteifungsflächenanordnung unkontrolliert in Ihrer Dimension in Produktionsrichtung, kann das Folgewerkzeug die zuvor erzeugte Verformung wieder zerstören.

Dank der erfindungsgemäßen Verfahrensgestaltung ist das kostengünstige Produzieren in solchen langlebigen Produktionsanlagen möglich, weil die Abstände des folgenden Bearbeitungsschrittes nun exakt eingehalten werden, was in dem Schrittverlauf Stanzfolge 5 zu Stanzfolge 6 nach Figur 3 besonders deutlich wird. Die Lochausstanzung darf hier nämlich nur den oberen "Deckel" durchstanzen und nicht die aufgestellte Konturierung, also die seitlichen Wände. Es konnten als weiterer konkreter Erfindungserfolg Materialstärken der verwendbaren Materialbahn weiter reduziert werden, beispielsweise auf 0,2 mm. Die erfindungsgemäße Versteifungsflächenanordnung wirkte ohne Planhaltung selbst dann ausreichend der grundsätzlich durch die Formgebung verursachten Spannung im Material entgegen, sodass es beim Schieben ausreichend wenig zur Stauchung oder beim Ziehen ausreichend wenig zum Strecken des Materials kam.

In Figur 4 ist eine weitere vorteilhafte Ausführungsform der Erfindung als drittes Ausführungsbeispiel eines Fertigungsverfahrens für eine Lamelle 10‴ dargestellt. Bei einer fluchtenden Anordnung der Rohrlöcher 16‴ in Reihe, wird mit unverformten Verstärkungsstreifen 26‴ zwischen den Rohrreihen die Versteifungsspur gelegt. Dies gelang bei besonders bevorzugten Ausführungsformen auch mit ausreichendem Erfolg, wenn nur alle zwei, drei oder vier Rohrreihen solche Verstärkungsstreifen 26‴ freigehalten waren.

### Bezugszeichenliste:

- 1: Wärmeübertrager
- 3: Rohre
- 5: Bahnmaterial

- 10: Lamelle
- 10‴: Lamelle
- 12: Umformungen
- 12": Umformungen
- 14: Konturierung
- 14": Konturierung
- 16: Loch
- 16": Loch
- 16‴: Rohrloch

- 20: vorderes Ende
- 20": vorderes Ende
- 22: Versteifungsfläche
- 22'': Versteifungsfläche
- 24: Versteifungsfläche
- 24'': Teilversteifungsfläche
- 26: Versteifungsfläche
- 26‴: Verstärkungsstreifen
- 27‴: Planhaltungsflächen
- 28: hinteres Ende

- L: Luftrichtung
- S: Produktionsrichtung

## Patentansprüche

1. Fertigungsverfahren für das Umformen eines Bahnmaterials zu einer regelmäßig zur Oberflächenvergrößerung eines Lamellenpaketes umgeformten Lamelle (10), welche Lamellen (10) im Anschluss an die Fertigung in gewissem Abstand zueinander zur gemeinsamen Verrippung mehrerer Rohre (3) in einem Wärmeübertrager (1) angeordnet werden können, **dadurch gekennzeichnet, dass** die Lamellen (10) mit parallelen Konturlängsrichtungen quer zu einer Produktionsrichtung durch mehrere Einzelwerkzeuge eines Folgeverbunds geformt werden, von welchen Einzelwerkzeugen wenigstens eines längs der Produktionsrichtung verlaufende Versteifungsspuren einprägt, um die parallelen Konturen zumindest abschnittsweise zu unterbrechen.

2. Fertigungsverfahren nach Anspruch 1, **dadurch gekennzeichnet, dass** ein Bahnmaterial (5) von seiner flachen Grundbeschaffenheit ausgehend an einem vorderen Ende (20) in den Folgeverbund aus in der Produktionsrichtung (S) als Stanzfolgen aufeinander folgenden Einzelwerkzeugen eintritt, in zumindest zwei der Einzelwerkzeugen eine Konturierung (14) eingeprägt erhält und das Bahnmaterial (5) den Folgeverbund als eine geformte Lamellenbahn an einem in der Produktionsrichtung (S) gesehen hinteren Ende (28) verlässt.

3. Fertigungsverfahren nach einem der Ansprüche 1 oder 2, **dadurch gekennzeichnet, dass** das Bahnmaterial in der Produktionsrichtung gesehen an zumindest einer Stelle, bevorzugt ausschließlich an einer einzigen Stelle vor dem letzten Einzelwerkzeug auf beiden Außenseiten gleichzeitig zu dessen Vorschub gegriffen wird.

4. Fertigungsverfahren nach einem der vorangehenden Ansprüche, **dadurch gekennzeichnet, dass** in einem in Produktionsrichtung (S) gesehen vorderen Einzelwerkzeug über die Fläche des Bahnmaterials verteilt Versteifungsflächen (24) eingeprägt werden, wobei die Versteifungsflächen (24) in Produktionsrichtung (S) gesehen jeweils einen Anfang und ein Ende haben, die mithin in Produktionsrichtung (S) vorne und hinten jeweils begrenzten Versteifungsflächen (24) sich in einer seitlichen Projektion quer zur Produktionsrichtung (S) einander überschneiden, sodass solche Teilversteifungsflächen zumindest eine gebrochen zusammenwirkende Versteifungsflächenspur zumindest grob entlang der Produktionsrichtung (S) zumindest zwei der Stanzfolgen aus Folgeverbundwerkzeugen überspannend bilden.

5. Fertigungsverfahren nach Anspruch 4, **dadurch gekennzeichnet, dass** die zumindest eine Versteifungsflächenspur in der Produktionsrichtung (S) folgend hinteren Einzelwerkzeugen und/oder Montageverfahren wiederaufgenommen wird, sodass von ihnen unabhängig verlaufend mit gesicherter Positionierung der Materialbahn relativ zu den hinteren Einzelwerkzeugen oder Montagewerkzeugen weitere Umformungen (12) einprägbar oder andere Komponenten montierbar sind, insbesondere die Rohre (3).

6. Fertigungsverfahren für einen Wärmeübertrager (1) mit im Abstand zueinander angeordneten Lamellen (10) zur gemeinsamen Verrippung mehrerer Rohre (3), bei dem die Herstellung der Lamellen (10) als ein Stanzen in Folgeverbundwerkzeugen ausgeführt wird, wobei ein Bahnmaterial (5) von seiner flachen Grundbeschaffenheit ausgehend an einem vorderen Ende (20) in eine Straße aus in einer Stanzrichtung (S) als Stanzfolgen aufeinander folgenden Folgeverbundwerkzeugen eintritt, um in zumindest zwei Folgeverbundwerkzeugen eine Konturierung (14) eingeprägt zu erhalten, und wobei das Bahnmaterial in Stanzrichtung gesehen an zumindest einer Stelle zu dessen Vorschub gegriffen wird, und wobei das Bahnmaterial (5) die Folgeverbundwerkzeuge als eine geformte Lamellenbahn an einem in Stanzrichtung (S) gesehen hinteren Ende (28) verlässt, nachdem die Lamellen (10) in hinteren Folgeverbundwerkzeugen in einer späteren Luftrichtung (L) eines Wärmeübertragerfluids verlaufende Umformungen (12) erhalten hat, sodass die Stanzrichtung (S) und die spätere Luftrichtung (L) quer zueinander ausgerichtet sind, und wobei in einer vorderen Stanzfolge über die Fläche des Bahnmaterials verteilt Versteifungsflächen (22, 24, 26) eingeprägt werden, wobei die Versteifungsflächen (22, 24, 26) sich in einer seitlichen Projektion quer zur Stanzrichtung (S) zumindest beinahe erreichen oder einander überschneiden, sodass zumindest eine, zumindest gebrochen zusammenwirkende Versteifungsflächenspur zumindest grob entlang der Stanzrichtung (S) zumindest zwei der Stanzfolgen aus Folgeverbundwerkzeugen überspannend angelegt ist und in späteren Stanzfolgen zumindest als Teilversteifungsflächen wiederaufgenommen wird, sodass um die Versteifungsflächen (22, 24, 26) herum und ggf. von ihnen unabhängig verlaufend mit gesicherter Positionierung der hinteren Folgewerkzeuge zum Bahnmaterial (5) die Umformungen (12) einprägbar sind.

7. Fertigungsverfahren nach Anspruch 6, **dadurch gekennzeichnet, dass** die Umformungen (12) als Wellen im Schnitt quer zur Luftrichtung (L) des Wärmeübertragerfluids sinusförmig ausgebildet werden und dass die Wellen zu den Versteifungsflächen hin als Wölbungen auslaufen, weil die Versteifungsflächen von Planhaltern während des Wellenformens vor Ihrer Umformung geschützt sind, wobei das Planhalten gleichzeitig als Fixieren oder Führung des Bahnmaterials zum jeweiligen Folgewerkzeug dient, oder weil in einer bevorzugten Variante ohne Planhaltung schon die Haltung der Positionsgenauigkeit wegen größerer Dimensionsstabilität in einem mittels der Versteifungsflächen geschaffenen Toleranzbereich ausreichend sicher gelingt.

8. Fertigungsverfahren nach einem der Ansprüche 6 oder 7, **dadurch gekennzeichnet, dass** von dem vorderen Ende (20) ausgehend zumindest die folgenden vier Stanzfolgen hintereinander angeordnet sind und in einem einzigen Hub stanzen, wobei nach dem Stanzhub ein Bahntransport um die Länge einer Stanzfolge in Stanzrichtung (S) erfolgt: Ausformen von Versteifungsflächen als Konturen (14), Ausformen von regelmäßigen Umformungen (12) außerhalb der Versteifungsflächen, Herstellen von Löchern (16), bevorzugt in den Versteifungsflächen ausgestanzte Löcher, Kragenformen.

9. Verwendung von verrippte Wärmeübertragerrohre (3) umrandende Versteifungsflächen (22, 24, 26) in einem Fertigungsverfahren zur Herstellung von Lamellen (10) für einen Wärmeübertrager (1), welche Versteifungsflächen (22, 24, 26) in einer vorderen Stanzfolge, örtlich gesehen vor dem eigentlichen Wellenformen, über die Fläche des noch planen Bahnmaterials (5) als eine zumindest gebrochen zusammenwirkende Versteifungsflächenspur zumindest grob entlang der Produktionsrichtung (S) verteilt einprägt werden, die beim weiteren Ausformen der Lamelle (10) zum Position sichern dienen, und welche Versteifungsflächen die ansonsten regelmäßige, beispielsweise wellenartige Lamellenform im Bereich um für die Wärmeübertragerrohre vorgesehene Löcher abflachen, sodass sich solche Versteifungsumrandungen einer versetzten Rohranordnung in Wellenlängsrichtung (L), also quer zur Produktionsrichtung (S) gesehen in der Projektion überschneiden, zur Produktionsverbesserung der Lamellenfertigung und/oder der Wärmeübertragermontage.

## Claims

1. A production method for reshaping a strip material into a fin (10) reshaped regularly to enlarge the surface of a fin package, wherein these fins (10) can be arranged at a certain distance from each other for joint ribbing of multiple tubes (3) in a heat exchanger (1) subsequent to production, **characterised in that** the fins (10) are shaped with parallel contour longitudinal directions crosswise to a production direction by several individual tools of a serial arrangement, wherein at least one of these individual tools embosses stiffening tracks running longitudinally to the production direction in order to interrupt the parallel contours at least in sections.

2. The production method in accordance with claim 1, **characterised in that** a strip material (5) enters the serial arrangement of individual tools following in sequence on each other as punching sequences in the production direction (S) in a front end (20), starting at its flat basic property, has a contouring (14) embossed in at least two of the individual tools, and the strip material (5) leaves the serial arrangement as a shaped fin strip at a rear end (28) when viewed in the production direction (S).

3. The production method in accordance with one of claims 1 or 2, **characterised in that** the strip material is gripped on both outer sides at the same time to be fed forward in at least one place, preferably exclusively in a single place upstream of the last individual tool viewed in the production direction.

4. The production method in accordance with one of the preceding claims, **characterised in that** stiffening surfaces (24) are embossed distributed across the surface of the track material in a front individual tool viewed in the production direction (S), wherein the stiffening surfaces (24) each have a start and an end when viewed in the production direction (S), the stiffening surfaces (24) that are limited at the front and rear in the production direction (S) overlap each other in a lateral projection crosswise to the production direction (S), so that such partial stiffening surfaces form at least an intermittently interacting stiffening surface track at least roughly along the production direction (S), spanning at least two of the punching sequences of subsequent arrangement tools.

5. The production method in accordance with claim 4, **characterised in that** the at least one stiffening surface track is picked up again in rear individual tools and/or assembly methods following the production direction (S) so that further reshapings (12) that are running independently of them can be embossed or other components, in particular the tubes (3), can be mounted with secured positioning of the material track relative to the rear individual tools.

6. A production method for a heat exchanger (1) with fins (10) arranged spaced to each other for joint ribbing of multiple tubes (3), wherein the production of the fins (10) is performed as a punching in serial arrangement tools, wherein a strip material (5) enters a lane of serial arrangement tools following in sequence on each other as punching sequences in a punching direction (S) at a front end (20), starting at its flat basic property, in order to be embossed with a contouring (14) in at least two subsequent arrangement tools, and wherein the strip material is gripped in at least one point viewed in the punching direction to feed it forward, and wherein the strip material (5) leaves the subsequent arrangement tools as a shaped fin track in a rear end (28), viewed in the punching direction (S), after the fin (10) has received reshapings (12) running in a later air direction (L) of a heat exchanger fluid in rear subsequent arrangement tools so that the punching direction (S) and the later air direction (L) are aligned crosswise to each other, and wherein stiffening surfaces (22, 24, 26) are embossed in a front punching sequence distributed across the surface of the strip material, wherein the stiffening surfaces (22, 24, 26) at least nearly overlap in a lateral projection crosswise to the punching direction (S) so that at least an at least intermittently interacting stiffening surface track is applied at least roughly along the punching direction (S), spanning at least two of the punching sequences of subsequent arrangement tools and taken up again at least as partial stiffening surfaces in later punching sequences, so that the reshapings (12) can be embossed around the stiffening surfaces (22, 24, 26), and if applicable running independently of them with secured positioning of the rear subsequent tools to the strip material (5).

7. The production method in accordance with claim 6, **characterised in that** the reshapings (12) are formed as sinusoidal corrugations in a cross-section crosswise to the air direction (L) of the heat exchanger fluid and that the corrugations run out as bulges towards the stiffening surfaces because the stiffening surfaces are protected from being reshaped by planar-retainers during corrugation forming, wherein the planar retention at the same time serves to fixate or guide the lane material to the respective subsequent tool or because retention of an accurate position is already sufficiently secure in a preferred version without planar retention due to greater dimensional stability in a tolerance range created with the stiffening surfaces.

8. The production method in accordance with one of claims 6 or 7, **characterised in that** at least the following four punching sequences are arranged in sequence starting at the front end (20) and punching in a single stroke, wherein a strip transport by the length of one punching sequence in the punching direction (S) takes place after the punching stroke: Forming of stiffening surfaces as contours (14), forming of regular reshapings (12) outside of the stiffening surfaces, production of holes (16), preferably holes punched out in the stiffening surfaces, collar forming.

9. Use of stiffening surfaces (22, 24, 26) framing ribbed heat exchanger tubes (3) in a production method for production of fins (10) for a heat exchanger (1), wherein these stiffening surfaces (22, 24, 26) are embossed in a front punching sequence, locally upstream of the actual corrugation forming, as an at least intermittently interacting stiffening surface track at least roughly along the production direction (S), distributed across the surface of the still-planar strip material (5), to serve for securing position during further forming of the fin (10), such stiffening surfaces flattening the otherwise regular, for example corrugated, fin shape in the area around the holes intended for the heat exchanger tubes so that such stiffening frames of an offset tube arrangement overlap in the corrugation longitudinal direction (L), i.e., viewed crosswise to the production direction (S), in the projection for production improvement of the fin production and/or the heat exchanger assembly.

## Revendications

1. Procédé de fabrication pour le formage d'un matériau en bande en une lamelle (10) régulièrement formée pour augmenter la surface d'un paquet de lamelles, lesquelles lamelles (10) peuvent être disposées dans un échangeur de chaleur (1) à une certaine distance les unes des autres pour le nervurage de joints de plusieurs tubes (3) après production, **caractérisé en ce que** les lamelles (10) avec des directions longitudinales de contour parallèle perpendiculaires à une direction de production sont formées par plusieurs outils individuels d'un ensemble séquentiel, à partir duquel les outils individuels marquent au moins une trace de renfort s'étendant le long de la direction de production afin d'interrompre les contours parallèles au moins en sections.

2. Procédé de fabrication selon la revendication 1, **caractérisé en ce qu'**un matériau en bande (5) à partir de sa caractéristique principale plate entre à une extrémité avant (20) dans le composite séquentiel constitué d'outils individuels se succédant dans la direction de production (S) sous forme de séquences d'estampage, reçoit un contourage (14) imprimé dans au moins deux des outils individuels et le matériau en bande (5) quitte le composite séquentiel sous forme d'une bande de lamelles formée à une extrémité arrière (28) vue dans la direction de production (S).

3. Procédé de fabrication selon l'une des revendications 1 ou 2, **caractérisé en ce que** le matériau en bande est vu dans le sens de la production en au moins un point, exclusivement en un seul point, devant le dernier outil individuel sur les deux faces extérieures simultanément pour son avance.

4. Procédé de fabrication selon l'une des revendications précédentes, **caractérisé en ce que** dans un outil individuel orienté vers l'avant, vu dans le sens de fabrication (S), sur la surface du matériau en bande, les surfaces de renfort (24) sont gaufrées, chacune ayant un début et une fin, les surfaces de renfort (24) ainsi limitées respectivement dans la direction de production (S) à l'avant et à l'arrière, se chevauchent dans une projection latérale transversale perpendiculaire à la direction de production (S), de sorte que ces surfaces de renfort partielles forment au moins une piste de surface de renfort interagissant fractionnée, au moins grossièrement le long de la direction de production (S) couvrant au moins deux des séquences d'estampage d'outils composites séquentiels.

5. Procédé de fabrication selon la revendication 4, **caractérisé en ce que** l'on reprend au moins une piste de surface de renfort dans la direction de production (S) suivant les outils individuels arrière et/ou les procédés de montage, de sorte que d'autres déformations (12) puissent être imprimées ou que d'autres composants puissent être montés indépendamment avec un positionnement sûr du matériau en bande par rapport aux outils individuels arrière ou aux outils d'assemblage, en particulier les tubes (3).

6. Procédé de fabrication d'un échangeur de chaleur (1) à lamelles (10) espacées pour le nervurage de plusieurs tubes (3), dans lequel la production des lamelles (10) est réalisée par estampage dans des outils composites séquentiels, dans lequel un matériau en bande (5) à partir de sa caractéristique principale plate entre à une extrémité avant (20) dans une ligne d'outils composites séquentiels se succédant dans une direction d'estampage (S) sous la forme de séquences d'estampage, pour obtenir un contour (14) gaufré dans au moins deux outils composites successifs, et dans lequel le matériau en bande, vu dans la direction de l'estampage, est saisi en au moins un point pour son avance, et dans lequel le matériau en bande (5) quitte les outils composites successifs sous la forme d'une bande de lamelles formée à une extrémité arrière (28) vue dans la direction de l'estampage (S), après que les lamelles (10) ont subi des déformations (12) s'étendant dans une direction d'air ultérieure (L) d'un fluide caloporteur dans des outils composites séquentiels arrière, de sorte que la direction d'estampage (S) et la direction d'air ultérieure (L) sont orientées transversalement l'une par rapport à l'autre, et dans lequel, dans une séquence d'estampage avant, des surfaces de renfort (22, 24, 26) réparties sur la surface du matériau en bande sont estampées, les surfaces de renfort (22, 24, 26) se rejoignent presque ou se recoupent dans une projection latérale perpendiculaire à la direction de découpage (S), de sorte qu'au moins une trace de surface de renfort interagissant au moins de manière fractionnée est appliquée au moins grossièrement le long de la direction d'estampage (S) en recouvrant au moins deux des séquences d'estampage d'outils composites séquentiels et est reprise dans des séquences d'estampage ultérieures au moins sous forme de surfaces de renfort partielles, de sorte qu'autour des surfaces de renfort (22, 24, 26) et le cas échéant dans les séquences d'estampage suivantes, des surfaces de renfort partielles sont formées les déformations (12) peuvent être imprimées en s'étendant indépendamment de celles-ci avec un positionnement sûr des outils à suivre arrière par rapport au matériau en bande (5).

7. Procédé de fabrication selon la revendication 6, **caractérisé en ce que** les déformations (12) sont formées sous forme d'ondulations dans la coupe transversale à la direction de l'air (L) du fluide de l'échangeur de chaleur de manière sinusoïdale et **en ce que** les ondulations se terminent vers les surfaces de renfort sous forme de bombages, parce que les surfaces de renfort des supports plans sont protégées contre leur déformation pendant le formage des ondulations, le maintien de la planéité servant en même temps de fixation ou de guidage du matériau en bande vers l'outil suivant respectif, ou parce que dans une variante préférée sans maintien de la planéité le maintien de la précision de position est déjà suffisamment sûr en raison d'une plus grande stabilité dimensionnelle dans une zone de tolérance créée au moyen des surfaces de renfort.

8. Procédé de fabrication selon l'une des revendications 6 ou 7, **caractérisé en ce que** à partir de l'extrémité avant (20), au moins les quatre séquences d'estampage suivantes sont organisées l'une après l'autre et la perforation en une seule course, où après la course d'estampage, un transport de bande de longueur d'une séquence d'estampage dans la direction d'estampage (S) a lieu : Mise en forme de surfaces de renfort en tant que contours (14), mise en forme de formes régulières (12) à l'extérieur des surfaces de renfort, production de trous (16), trous de préférence estampés dans les surfaces de renfort, formes de cols.

9. Utilisation de surfaces de renfort (22, 24, 26) entourant des tubes d'échangeur de chaleur (3) nervurés dans un procédé de fabrication pour la fabrication de lamelles (10) pour un échangeur de chaleur (1), lesquelles surfaces de renfort (22, 24, 26) sont imprimées dans une séquence d'estampage avant, vu localement avant le formage ondulé proprement dit, sur la surface du matériau en bande (5) encore plan sous la forme d'une trace de surface de renfort interagissant au moins de manière fractionnée et répartie au moins grossièrement le long de la direction de production (S), qui servent à assurer la position lors de la poursuite du formage de la lamelle (10), et lesquelles surfaces de renfort aplatissent la forme de la lamelle, par ailleurs régulière, par exemple ondulée, dans la zone autour des trous prévus pour les tubes de l'échangeur de chaleur, de sorte que de tels bords de renfort d'un agencement de tubes décalé se recoupent en projection dans la direction longitudinale (L) de l'ondulation, donc vu transversalement à la direction de production (S), pour améliorer la production de la fabrication des lamelles et/ou du montage de l'échangeur de chaleur.
